Europäisches Patentamt

European Patent Office

Office européen des brevets

(19)

(11) **EP 1 569 448 A1**

(12) **EUROPEAN PATENT APPLICATION**
published in accordance with Art. 158(3) EPC

(43) Date of publication:
**31.08.2005 Bulletin 2005/35**

(21) Application number: **03777276.1**

(22) Date of filing: **05.12.2003**

(51) Int Cl.7: **H04N 5/91**, G06T 7/20

(86) International application number:
**PCT/JP2003/015574**

(87) International publication number:
**WO 2004/054253 (24.06.2004 Gazette 2004/26)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **06.12.2002 JP 2002355268
12.03.2003 JP 2003066399**

(71) Applicant: **NEC CORPORATION
Tokyo 108-8001 (JP)**

(72) Inventors:
• **KASUTANI, Eiji, NEC CORPORATION
Tokyo 108-8001 (JP)**
• **YAMADA, Akio, NEC CORPORATION
Tokyo 108-8001 (JP)**

(74) Representative: **Vossius & Partner
Siebertstrasse 4
81675 München (DE)**

(54) **IMAGE DESCRIPTION SYSTEM AND METHOD THEREOF**

(57)     In a picture description system, a memory unit stores description schemes defined for every category of picture. When a picture is specified, a control unit specifies features extractable from the specified picture with reference to a description scheme in the memory unit associated with category of the specified picture. A description file generating unit extracts data associated with the specified features from the specified picture and generates a description file of the specified picture.

F i g . 1

**Description**

**Technical Field**

The present invention relates to a system and a method for describing various features of multi-media contents.

**Background Art**

As a network as represented by the Internet becomes broadband, not only text (character) data but also multi-media contents including video and audio become widely distributed online to the general public. On one hand, this enables users to access a variety of information easily; on the other hand, this causes an ironical phenomenon that it becomes more difficult to access really necessary and useful information, because too much information and a huge variety of information are provided.

Under these circumstances, a technology covering medadata has been a focus of attention as a means for retrieving, filtering, and indexing multi-media contents effectively. The metadata concisely describe features extracted from multi-media contents in a predetermined format, and setting the metadata as the direct target of retrieval can promote the efficiency of the retrieval. In particular, it is often hard to express visual/audio information in concrete language, and it is appropriate to quantify such sensuous information and to express it in the metadata.

Against such a background, a unified describing system for the metadata of the multi-media contents is provided by the MPEG-7. The so-called MPEG-7 Visual is a part of the MPEG-7, which provides a standardized format ISO/IEC15938-3 for describing signal features of visual contents (hereinafter, referred to as visual feature). Defined in the MPEG-7 Visual are the visual features of visual contents and a method of generating visual descriptors used for describing the visual features. Here, the visual contents include a rectangular picture such as a digital photo, an arbitrary-shaped picture such as a clip art, rectangular video (video sequence) which is a set of rectangular frames, and a video object which is an arbitrary-shaped region or sequence of an object in a moving picture.

Hereinafter, a conventional picture description system will be explained with reference to an edge descriptor: EdgeHistogram as an example of the visual descriptor.

The EdgeHistogram indicates a histogram of local edge information. A picture is divided into 4x4 blocks, and the EdgeHistogram is a descriptor for describing in three bits the number of each of predetermined five type edges in respective blocks. The EdgeHistogram feature is generated as follows.

$$D = [E_{ij} \ (i=1,2,..,16, \ j=1,2,\cdots,5)]$$

Here, $E_{ij}$ indicates the j-th edge element in block i (in order of raster scan). The descriptor is created as follows. First, a picture is divided into four-by-four blocks, i.e., a total of 16 blocks. Next, the edge in each direction in each block is detected by mask operation. When an output of the operation exceeds a threshold value, a vote is added to associated bin in the histogram. Thus, the feature is established.

For example, based on the syntax defined by the MPEG-7 Visual Part as in Table. 1, extracted features are described as in Table. 2

## Table. 1

```
<complexType name="EdgeHistogramType"  final="#all>

  <complexContent>

   <extension base=" mpeg7:VisualDType">

    <sequence>

     <element name=" BinCounts">

       <sinpleType>

        <restriction>


              <simpleType>

                <listitemType=" mpeg7:unsigned3" />

              </simpleType>

              <lengthvalue=" 80" />

            </restriction>

          </simpleType>

        </element>

      </sequence>

     </extension>

    </complexContent>

   </complexType>
```

## Table. 2

```
<Descriptor xsi:Type=" EdgeHistogramType">

    <BinCounts> 121123 ..... 11511 </BinCounts>

</Descriptor>
```

A system for describing signal features of a picture with the visual descriptors defined by the MPEG-7 Visual is distributed as a "MPEG-7 XM Software". In this system, a user specifies a target picture for which the descriptors are generated, and selects a visual feature to be extracted. The visual feature constituting the selected visual descriptor is extracted from the specified picture. Thus, a description file is generated, in which the extracted visual feature is described by using the visual descriptor.

A variety of techniques are proposed with regard to picture description using the descriptors. For example, Japanese Laid Open Patent Application (JP-P2002-170116) discloses a method for making it easy to distinguish pictures, in which sufficient space information is embedded in the descriptor and a picture is described on the basis of its contents.

As mentioned above, the metadata concisely describe features extracted from multi-media contents in a predetermined format, and setting the metadata as the direct target of retrieval can promote the efficiency of the retrieval. Therefore, how to generate the metadata appropriately describing multi-media contents is an important factor which has a direct influence on the efficiency and accuracy of the retrieval.

However, according to the above-mentioned conventional system, a picture is described by using all the visual descriptors without regard to category of the picture, although there are available and unavailable descriptors depending on the category of the picture. For this reason, the picture description may be carried out for a picture in a certain category by using an inappropriate descriptor. For example, a rectangular picture, which is a still picture, may be described by a motion activity descriptor.

Also, in order to directly utilize a description file generated for a specific type system in another system, it is necessary to support all utilization tools for the visual descriptors. Thus, there is a problem in that the system scale becomes enormously large.

In association with the above explanation, an optical disk player is disclosed in Japanese Laid Open Patent Application (JP-P2001-57057). In this prior art, a read unit reads from an optical disk audio/video data, audio/video sequence data, object data, title set position data, and disk management data. A control unit controls the read unit. A memory unit stores AMG when the disk is recognized as DVD-Audio. Further, the memory unit retrieves VGM, and stores the VGM at the same time if there exists the VGM. An input unit receives a user's instruction to select either the AMG or the VGM.

Also, a picture retrieving system is disclosed in Japanese Laid Open Patent Application (JP-P2001-167095). In this prior art, a feature descriptor generating unit extracts a picture feature from input picture data, generates a feature descriptor, and stores it in a picture information storing unit in relation to the input picture data. A property list generating unit generates a property list on the basis of property data which is inputted together with the input picture data. When criteria regarding the property data is inputted, a picture retrieving unit searches the property list and outputs the property data fitting the criteria. When criteria regarding the feature descriptor is inputted, the picture retrieving unit searches the picture information storing unit and outputs the picture data fitting the criteria.

Also, an interactive system for media contents is disclosed in Japanese Laid Open Patent Application (JP-P2001-292425). In this prior art, a controller controls a media output equipment to output the media contents. An assigning unit assigns a semantic classification to metadata and interactive element. A selecting unit selects one from a plurality of semantic classifications. An output unit outputs metadata and interactive element belonging to the selected semantic classification in the form depending on the selected semantic classification.

Also, a method for using an audio-visual system is disclosed in Japanese Laid Open Patent Application (JP-P2001-346140). In this prior art, at least one of audio, picture and movie including a plurality of frames is treated. A user favorite description is provided, which describes a plurality of user's favorites in relation to the usage of at least one of audio, picture and movie. With regard to at least one favorite, a protection property is provided which indicates whether the one favorite is open or secret.

Also, a usage history description scheme for managing audio-visual data is disclosed in Japanese Laid Open Patent Application (JP-P2002-184157). In this prior art, a usage history process can access multi-media contents description consumed by a user, and is capable of monitoring the user's operations on a variety of apparatuses such as an AV equipment, a computer terminal and so on. A usage history module collects only permitted operation information from operations indicated by the user through a configuration layer, and records it. When detecting an accepted user operation, the usage history process records in user operation history element a unique descriptor of program/contents and additional contents description information in relation to occurrence time and operation. A usage history information uses user's selected history element, and records a predetermined subset of the contents description in table form and displays as a classification table.

**Disclosure of Invention**

An object of the present invention is to provide a picture description system and a picture description method which can extract appropriate features for visual contents.

Another object of the present invention is to provide a picture description system in which the system configuration is made simple by optimizing kind of supporting tools.

Still another object of the present invention is to provide a picture description system and a picture description method which can verify whether the format of a description file for a picture is appropriate or not.

In an aspect of the present invention, a picture description system has a memory unit which stores description schemes defined for every category of picture and a control unit which, when a picture is specified, specifies features extractable from the specified picture with reference to a description scheme in the memory unit associated with category of the specified picture.

Here, the picture description system can further has a description file generating unit which extracts data associated with the specified features from the specified picture and generates a description file of the specified picture.

Also, the control unit preferably displays the specified features selectably on a display unit. Here, the picture description system can further has a description file generating unit which extracts data associated with the specified features from the specified picture and generates a description file of the specified picture.

Also, the picture description system preferably further has a description file verifying unit which verifies the description file generated by the description file generating unit by using the description scheme associated with the category of specified picture.

Also, the memory unit preferably stores at least one of a rectangular picture description scheme for describing a rectangular picture, an arbitrary-shaped picture description scheme for describing an arbitrary-shaped picture, a rectangular video description scheme for describing a moving picture as a set of rectangular frames and a video object description scheme for describing an arbitrary-shaped object in a moving picture as a set of rectangular frames. In this case, the rectangular picture description scheme preferably has at least one feature of a plurality of features including at least color distribution, color layout, color temperature, illumination compensated color, edge distribution and texture. Also, each of the at least one feature preferably consists of at least one selectable descriptor. The color distribution feature preferably consists of a plurality of descriptors including at least DominantColor, ScalableColor and ColorStructure, at least one of which is selectable. The texture feature preferably consists of a plurality of descriptors including at least HomogeneousTexture and TextureBrowing, at least one of which is selectable.

Also, the arbitrary-shaped picture description scheme can have at least one feature of a plurality of features including at least color distribution, color layout, color temperature, illumination compensated color, edge distribution, texture and shape. In this case, each of the at least one feature may consist of at least one selectable descriptor. The shape feature may consist of a plurality of descriptors including at least ContourShape and RegionShape, at least one of which is selected.

Also, the rectangular video description scheme can include at least one feature of a plurality of features including at least time series data, representative feature and motion activity of the rectangular frames. In this case, each of the at least one feature may consist of at least one selectable descriptor. The time series data preferably has at least one feature of a plurality of features including at least color distribution, color layout, color temperature, illumination compensated color, edge distribution and texture, each of which consists of at least one selectable descriptor. The color distribution feature preferably consists of a plurality of descriptors including at least DominantColor, ScalableColor and ColorStructure, at least one of which is selectable. The texture preferably consists of a plurality of descriptors including at least HomogeneousTexture and TextureBrowing, at least one of which is selectable.

The representative feature preferably has at least one feature of a plurality of features including at least color distribution, color layout, color temperature, illumination compensated color, edge distribution and texture, each of which consists of at least one selectable descriptor. The color distribution feature preferably consists of a plurality of descriptors including at least DominantColor, ScalableColor and ColorStructure, at least one of which is selectable. The texture preferably consists of a plurality of descriptors including at least HomogeneousTexture and TextureBrowing, at least one of which is selectable.

The video object description scheme preferably has at least one feature of a plurality of features including at least time series data, representative feature and motion activity of the rectangular frames and object motion and shape variation. In this case, each of the at least one feature preferably consists of at least one selectable descriptor. The object motion preferably consists of a plurality of descriptors including at least MotionTrajectory and ParameterMotion, at least one of which is selectable.

The time series data preferably has at least one feature of a plurality of features including at least color distribution, color layout, color temperature, illumination compensated color, edge distribution and texture, each of which consists of at least one selectable descriptor. The color distribution feature preferably consists of a plurality of descriptors including at least DominantColor, ScalableColor and ColorStructure, at least one of which is selectable. The texture preferably consists of a plurality of descriptors including at least HomogeneousTexture and TextureBrowing, at least one of which is selectable.

Also, the representative feature preferably has at least one feature of a plurality of features including at least color distribution, color layout, color temperature, illumination compensated color, edge distribution and texture, each of which consists of at least one selectable descriptor. The color distribution feature preferably consists of a plurality of descriptors including at least DominantColor, ScalableColor and ColorStructure, at least one of which is selectable. The texture preferably consists of a plurality of descriptors including at least HomogeneousTexture and TextureBrowing, at least one of which is selectable.

Also, the memory unit can store at least one of a still picture description scheme for describing features of a still picture, a rectangular video description scheme for describing a moving picture as a set of rectangular frames and a video object description scheme for describing an arbitrary-shaped object in a moving picture as a set of rectangular frames. In this case, the still picture description scheme can have at least one feature of a plurality of features including at least color distribution feature, color layout feature, color temperature feature, illumination compensated color feature, edge distribution feature and texture feature. Also, each of the at least one feature preferably consists of at least one selectable descriptor. The color distribution feature preferably consists of a plurality of descriptors including at least DominantColor, ScalableColor and ColorStructure, at least one of which is selectable. The color layout feature preferably consists of descriptors including at least Colorlayout, at least one of which is selectable. The color temperature feature preferably consists of descriptors including at least ColorTemperature, at least one of which is selectable. The illumination compensated color feature preferably consists of descriptors including at least IlluminationInvariation-Color, at least one of which is selectable. The edge distribution feature preferably consists of descriptors including at least EdgeHistogram, at least one of which is selectable. The texture feature preferably consists of a plurality of descriptors including at least HomogeneousTexture and TextureBrowing, at least one of which is selectable. The still picture description scheme further preferably includes shape feature, and the shape feature preferably consists of a plurality of descriptors including at least RegionShape and ContourShape, at least one of which is selectable.

The memory unit can store at least one of a still picture description scheme for describing features of a still picture and a moving picture description scheme for describing a moving picture. In this case, the moving picture description scheme may include at least one feature of a plurality of features including at least time series data of frames of the moving picture, representative feature of the moving picture and motion activity of the moving picture. Each feature includes at least one selectable descriptor. In this case, the moving picture description scheme can further include motion description of the moving picture and shape variation description of the moving picture.

Also, a description scheme is used in a picture description system which specifies features extractable from a specified picture by referring to a description scheme associated with category of the specified picture. The description scheme can include at least one feature of a plurality of features including at least time series data of frames of the moving picture, representative feature of the moving picture and motion activity of the moving picture. Each feature includes at least one selectable descriptor. Here, the moving picture description scheme can further include motion description of the moving picture and shape variation description of the moving picture.

In another aspect of the present invention, a picture description method is achieved by a step of storing description schemes defined for every category of picture, a step of specifying, when a picture is specified, features extractable from the specified picture by retrieving a description scheme associated with category of the specified picture, and a step of displaying selectably features extractable from the specified features.

Here, the picture description method can further have a step of selecting desired features from the displayed features, and a step of extracting features from the specified picture according to the desired features and generating a description file. Also, the picture description method can further have a step of verifying the generated description file by using a description scheme associated with the category of specified picture.

In still another aspect of the present invention, a software product executable on a computer has a function of retrieving, when a picture is specified, a description scheme associated with category of the specified picture from a memory unit storing description schemes defined for every category of picture, a function of specifying features extractable from the specified picture based on retrieved description scheme, and a function of displaying selectably features extractable from the specified features.

Here, the software product can further has a function of extracting features, when desired features are selected from the displayed features, from the specified picture according to the desired features and generating a description file.

Also, the software product can further has a function of verifying the generated description file by using a description scheme associated with the category of specified picture.

In still another aspect of the present invention, a description scheme is used in a picture description system which specifies features extractable from a specified picture by referring to a description scheme associated with category of the specified picture. The description scheme has at least one feature of a plurality of features including at least color distribution feature, color layout feature, color temperature feature, illumination compensated color feature, edge distribution feature and texture feature. The color distribution feature consists of a plurality of descriptors including at least DominantColor, ScalableColor and ColorStructure, at least one of which is selectable. The color layout feature consists of descriptors including at least Colorlayout, at least one of which is selectable. The color temperature feature consists of descriptors including at least ColorTemperature, at least one of which is selectable. The illumination compensated color feature consists of descriptors including at least IlluminationInvariationColor, at least one of which is selectable. The edge distribution feature consists of descriptors including at least EdgeHistogram, at least one of which is selectable.

The texture feature consists of a plurality of descriptors including at least HomogeneousTexture and Texture-Browing, at least one of which is selectable.

The description scheme further includes shape feature. The shape feature consists of a plurality of descriptors including at least RegionShape and ContourShape, at least one of which is selectable.

As described above, according to the present invention, it becomes possible to easily select meaningful visual features and extract visual features which represent the specified picture appropriately.

Also, the description schemes are defined for every category of picture, which makes it possible to minimize kind of features and description tools to be supported and hence to simplify the system configuration.

Furthermore, it is preferable to verify the generated description file by using the description scheme associated with the category of the specified picture. By checking the generated description file against the picture description scheme as mentioned above, it becomes possible to verify whether the format of the description file for the picture is appropriate or not and hence to further improve efficiency and precision of the picture retrieval.

**Brief Description of Drawings**

Fig. 1 is a block diagram showing a configuration of a picture description system according to the first embodiment of the present invention;

Fig. 2 is a schematic diagram showing description tools included in rectangular picture description scheme in the first embodiment;

Fig. 3 is a diagram showing an example of the rectangular picture description scheme in the XML (extensible Markup Language);

Fig. 4 is a schematic diagram showing description tools included in image clip description scheme in the first embodiment;

Fig. 5 is a diagram showing an example of the image clip description scheme in the XML;

Fig. 6 is a schematic diagram showing description tools included in video sequence description scheme in the first embodiment;

Fig. 7 is a diagram showing an example of the video sequence description scheme in the XML;

Fig. 8 is a schematic diagram showing description tools included in video object description scheme in the first embodiment;

Fig. 9 is a diagram showing an example of the video object description scheme in the XML;

Fig. 10 is a diagram showing an example of a visual feature selection screen when the specified picture is a rectangular picture;

Fig. 11 is a diagram showing an example of a visual feature selection screen when the specified picture is an arbitrary-shaped picture;

Fig. 12 is a diagram showing an example of a visual feature selection screen when the specified picture is a rectangular video;

Fig. 13 is a diagram showing an example of a visual feature selection screen when the specified picture is an arbitrary-shaped moving picture;

Fig. 14 is a flow chart showing an operation of the picture description according to the first embodiment;

Fig. 15 is a block diagram showing a configuration of a picture description system according to the second embodiment of the present invention;

Fig. 16 is a block diagram showing a configuration of a picture description system according to the third embodiment of the present invention;

Fig. 17 is a diagram showing an example of the still region description scheme in the XML; and

Fig. 18 is a diagram showing an example of the moving picture description scheme in the XML.

**Best Mode for Carrying Out the Invention**

A picture description system according to the present invention will be described below in detail with reference to the drawings.

(First embodiment)

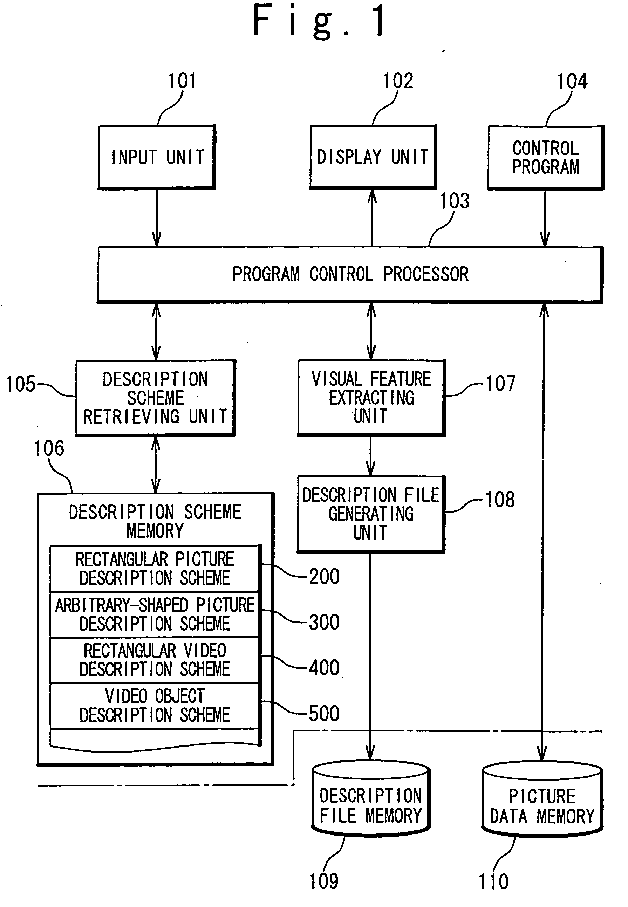

Fig. 1 is a block diagram showing a configuration of a picture description system according to the first embodiment of the present invention. In Fig. 1, an input unit 101 is an input device such as a keyboard and a pointing device. The input unit 101 is used for specifying a target picture from which a visual feature is extracted, for specifying the visual feature to be extracted, and for inputting various commands. A display unit 102 is a monitor. The display unit 102 displays a visual feature selection screen to be hereinafter described, and provides a user interface along with the input unit 101. A program control processor 103 in this system takes control of processes for extracting the visual features and operations of the whole system by executing a control program 104.

The picture description system according to the present embodiment is provided with a description scheme retrieving unit 105, a description scheme memory 106, a visual feature extracting unit 107, a description file generating unit 108. As described later, the description scheme retrieving unit 105, the visual feature extracting unit 107 and the description file generating unit 108 retrieves a picture description scheme, extracts a visual feature and generates a description file under the control of the program control processor 103, respectively.

A plurality of picture description schemes are stored in the description scheme memory 106. Here, a rectangular picture description scheme 200, an image clip (arbitrary-shaped picture) description scheme 300, a video sequence (rectangular video) description scheme 400 and a video object description scheme 500 are stored, or at least one picture description scheme selected from them is stored. These picture description schemes will be explained later in detail.

The description scheme retrieving unit 105 receives a command to retrieve picture description schemes from the program control processor 103, and retrieves description schemes associated with a category of a specified picture from the description scheme memory 106. Based on the read description schemes, sorts of visual features extractable from the specified picture are displayed in the display unit 102 in a predetermined form (as will hereinafter be described in detail).

When receiving a command to extract visual features, the visual feature extracting unit 107 reads the specified picture from a picture data memory 110 and extracts specified visual features from that picture. On the basis of the extracted visual features and parameters, the description file generating unit 108 generates a description file which is described by visual descriptors. The description file thus generated is stored in a description file memory 109 and is utilized for the picture retrieval and so on.

PICTURE DESCRIPTION SCHEME

(A) Rectangular Picture Description Scheme

The rectangular picture description scheme is designed for the purpose of describing signal features of a rectangular picture such as a digital picture. The principal purpose is to retrieve pictures with a similar signal pattern from digital picture archives such as digital photo archives and the like.

The signal features extractable from a rectangular picture are classified into six groups;

1) color distribution, 2) color layout, 3) color temperature, 4) illumination compensated color, 5) edge, and 6) texture. The visual features belonging to respective groups are defined as follows.

1) DominantColor / ScalableColor / ColorStructure
2) ColorLayout
3) ColorTemperature
4) IlluminationInvariantColor
5) EdgeHistogram
6) HomogeneousTexture / TextureBrowsing

If there are similar visual features in each group, it is not appropriate to use all at the same time, but it is preferable that one or some of them can be selected according to the purpose. Usage of a plurality of visual features for the color distribution and the texture is exemplified in Table. 3.

Table. 3

| Rectangular Picture Description Scheme | | |
|---|---|---|
| Signal Feature Group | Visual Feature | Application |
| Color Distribution | DominatColor | For accurate description of limited color region |
| | ScalableColor | For general application |
| | ColorStructure | Application requiring high precision |
| Color Layout | ColorLayout | - |
| Color Temperature | ColorTemperature | - |

Table. 3 (continued)

| Rectangular Picture Description Scheme | | |
|---|---|---|
| Signal Feature Group | Visual Feature | Application |
| Illumination Compensated Color | IlluminationInvariantColor | - |
| Edge | EdgeHistogram | - |
| Texture | HomogeneousTexture | Application requiring precision |
| | TextureBrowsing | For rough browsing of texture |

The three features for the color distribution are used as shown in Table. 3. That is to say, (1) the DominantColor is appropriate for describing a limited color region accurately, (2) the ScalableColor is appropriate for a general product such as an application in which compatibility with widely-used existing color histogram is required, (3) the ColorStructure is appropriate for an application such as a medical picture and the like in which precision is required anyway rather than cost. Therefore, the rectangular picture description scheme is designed such that at least one of the DominantColor, the ScalableColor and the ColorStructure can be selected according to these applications.

The two features for the texture are used as follows. The TextureBrowing is appropriate when only a rough browsing of texture is necessary, and the HomogeniousTexture is appropriate for an application requiring more precision. Therefore, the rectangular picture description scheme is designed such that at least one of the HomogeniousTexture and the TextureBrowing can be selected as a feature representing the texture. Moreover, the rectangular picture description scheme is designed such that necessary signal features can be selected from the color distribution, the color layout, the color temperature, the illumination compensated color, the edge and the texture.

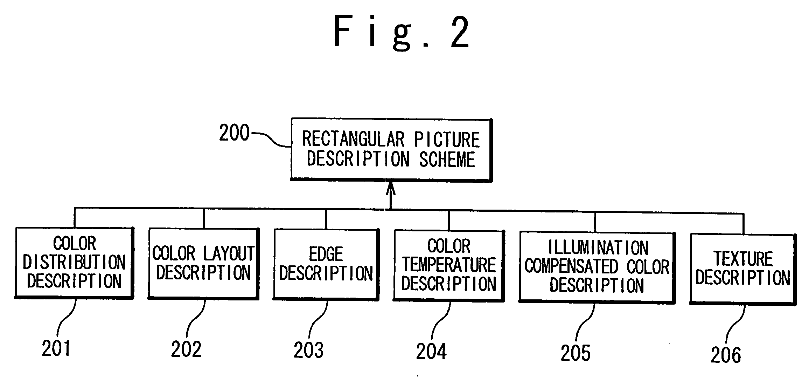

Fig. 2 is a schematic diagram showing description tools included in the rectangular picture description scheme according to the present embodiment. As shown in Fig. 2, the rectangular picture description scheme 200 defines signal features of a specific frame of a moving picture or a rectangular still picture. The rectangular picture description scheme 200 includes a color distribution description 201, a color layout description 202, an edge description 203, a color temperature description 204, an illumination compensated color description 205 and a texture description 206.

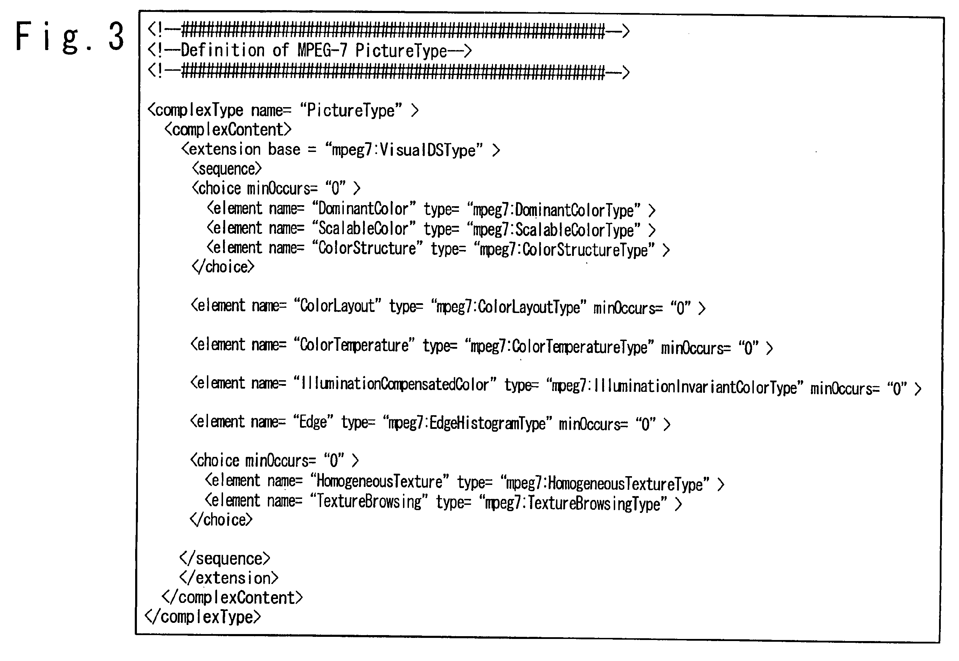

Fig. 3 is a diagram showing an example of the rectangular picture description scheme in the XML (extensible Markup Language). The description scheme is executed by an arbitrary language and includes arbitrary contained descriptions (or more descriptions). It should be noted that in Fig. 3 a name indicated by "name" attribute in an element component is arbitrary. However, it is preferable that the name represents feature of the descriptor indicated by "type".

(B) Image Clip Description Scheme

The image clip description scheme is designed for the purpose of describing signal features of an arbitrary-shaped picture such as a clip art. The principal purpose is to retrieve clips with a similar signal pattern from material archives and the like used for creating contents. All the signal features obtained from a rectangular picture can be accommodated to an arbitrary-shaped picture. Signal features obtained from an arbitrary-shaped picture can have a shape feature in addition to the signal features obtained from a rectangular picture. Visual features for the shape feature includes ContourShape and RegionShape. It is not appropriate to use both at the same time, but it is necessary that at least one of them can be selected according to the purpose. Usage of the two visual features for the shape feature together with the rectangular picture description scheme is exemplified in Table. 4.

Table. 4

| Image Clip Description Scheme | | |
|---|---|---|
| Signal Feature Group | Visual Feature | Application |
| Color Distribution | DominatColor | For accurate description of limited color region |
| | ScalableColor | For general application |
| | ColorStructure | Application requiring high precision |
| Color Layout | ColorLayout | - |
| Color Temperature | ColorTemperature | - |
| Illumination Compensated Color | IlluminationInvariantColor | - |

Table. 4   (continued)

| Image Clip Description Scheme | | |
|---|---|---|
| Signal Feature Group | Visual Feature | Application |
| Edge | EdgeHistogram | - |
| Texture | HomogeneousTexture | Application requiring precision |
|  | TextureBrowsing | For rough browsing of texture |
| Shape | CountourShape | Application where contour description is possible and robust characteristics of revolution is required |
|  | RegionShape | For general application |

As shown in Table. 4, ContourShape is appropriate in the case when contour description is possible and robust characteristics of revolution is required, and RegionShape is appropriate for the other general applications. Therefore, the image clip description scheme is designed such that at least one of the ContourShape and the Region-Shape can be selected as a feature representing the shape.

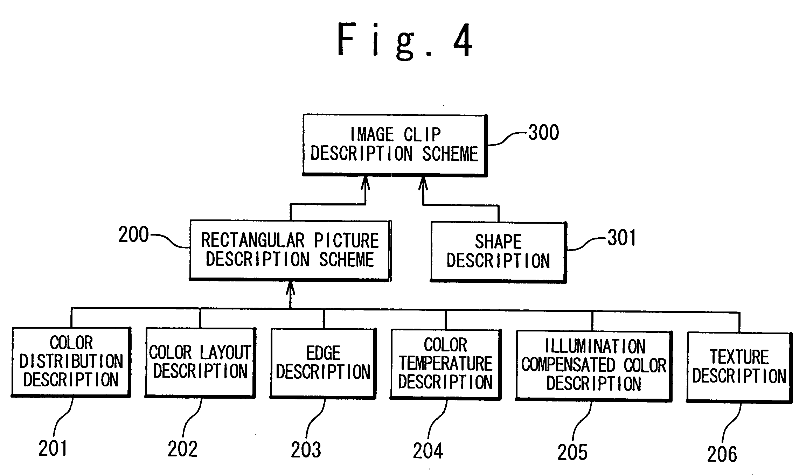

Fig. 4 is a schematic diagram showing description tools included in the image clip description scheme according to the present embodiment. The image clip description scheme defines signal features of an arbitrary-shaped picture. As shown in Fig. 4, the image clip description scheme 300 includes a shape description 301 together with the color distribution description 201, the color layout description 202, the edge description 203, the color temperature description 204, the illumination compensated color description 205 and the texture description 206 included in the rectangular picture description scheme 200. The image clip picture description scheme is designed such that necessary signal features can be selected from these descriptions.

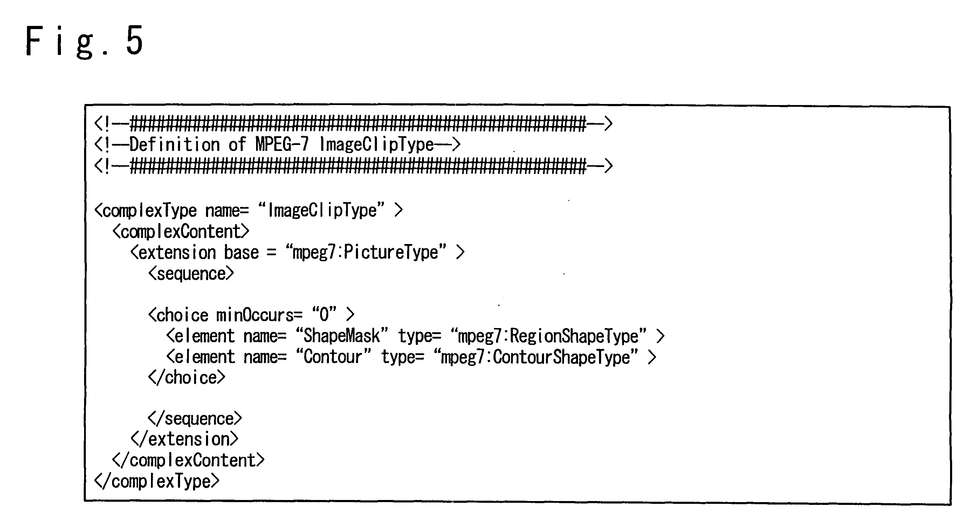

Fig. 5 is a diagram showing an example of the image clip description scheme in the XML. The description scheme is executed by an arbitrary language and includes arbitrary contained descriptions (or more descriptions). It should be noted that in Fig. 5 a name indicated by "name" attribute in an element component is arbitrary. However, it is preferable that the name represents feature of the descriptor indicated by "type".

(C) Video Sequence Description Scheme

The video sequence description scheme is designed for the purpose of describing signal features of a moving picture. The principal purpose is to retrieve videos with a similar signal pattern from video archives.

The signal features extractable from a moving picture are classified into three groups; (1) time series data of a feature of rectangular pictures, (2) a feature representative of all frames in the moving picture, and (3) motion. The visual features belonging to respective groups are defined as follows.

1) VisualTimeSeries
2) GofGopColor
3) MotionActivity

When describing features for a frame contained in a moving picture as a unit, a temporal transition container (VisualTimeSeries) can be utilized. When describing features for the whole moving picture as a unit, a representative feature container (GofGopColor) can be utilized. Both of them can be also utilized. It is possible to allocate a feature descriptor anywhere.

The container functions as an adhesive agent for collectively treating a set of feature descriptors describing a part of a content. The VisualTimeSeries is for representing the feature descriptors aligned on the time-axis in a lump, and includes Regular VisualTimeSeries for allocating descriptors at a fixed interval and Irregular VisualTimeSeries for allocating descriptors at variable intervals. It is possible to allocate the feature descriptors at each frame position. Also, the GofGopColor can allocate one feature descriptor for the whole moving picture.

The video sequence description scheme is designed such that necessary signal features can be selected from the time series data, the representative feature and the motion included in the video sequence description scheme. Table. 5 shows the video sequence description scheme.

Table. 5

| Video Sequence Description Scheme | | |
|---|---|---|
| Signal Feature Group | Visual Feature | Application |
| Time Series | VisualTimeSeries (Rectangular Picture Description Scheme) | For frame contained in moving picture |
| Representati ve Feature | GofGopColor (Rectangular Picture Description Scheme ) | Description for whole of moving picture |
| Motion | MotionActivity | - |

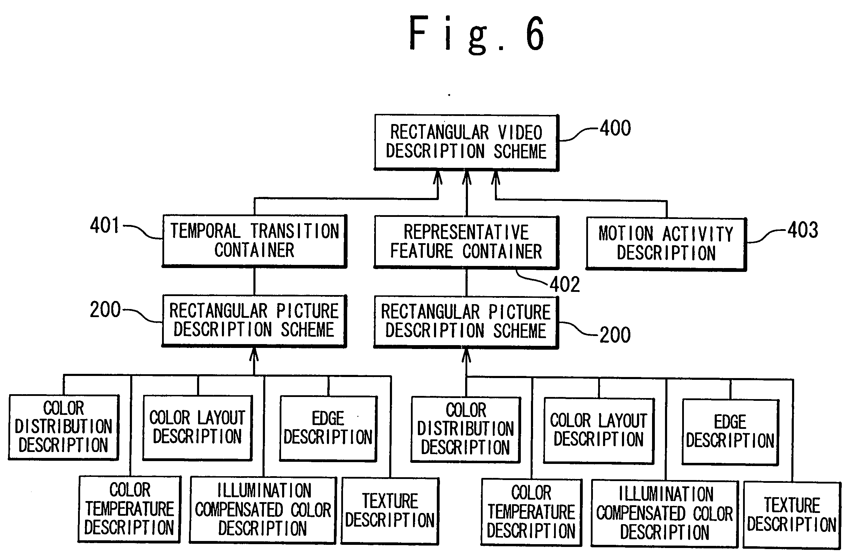

Fig. 6 is a schematic diagram showing description tools included in the video sequence description scheme according to the present embodiment. The video sequence description scheme defines signal features of a video sequence (a set of a plurality of frames). The video sequence description scheme 400 includes a temporal transition container 401 of features for rectangular pictures, a representative feature container 402 of a feature representative of all frames in a moving picture and a motion activity description 403.

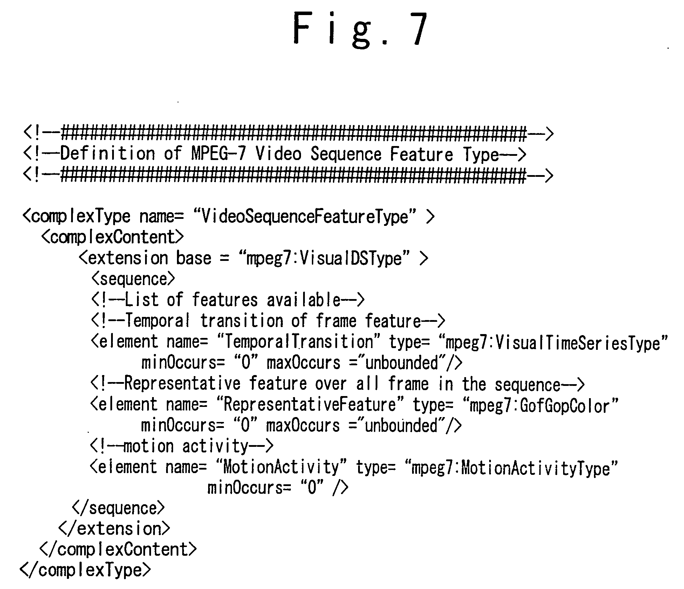

Fig. 7 is a diagram showing an example of the video sequence description scheme in the XML. The description scheme is executed by an arbitrary language and includes arbitrary contained descriptions (or more descriptions). It should be noted that in Fig. 7 a name indicated by "name" attribute in an element component is arbitrary. However, it is preferable that the name represents feature of the descriptor indicated by "type".

(D) Video Object Description Scheme

The video object description scheme is designed for the purpose of describing signal features of an object and an arbitrary-shaped region in a moving picture, like Video Object in the MPEG-4. The principal purpose is to retrieve video objects with a similar signal pattern from video object archives and the like used for creating contents.

All the signal features obtained from a video sequence can be accommodated to a video object. Signal features obtained from an arbitrary-shaped picture can have information of object motion and temporal transition of shape in addition to the signal features obtained from a rectangular picture. The signal features extractable from a video object are classified into two groups; (1) information of object motion and (2) shape variation. The visual features belonging to respective groups are defined as follows.

    1) MotionTrajectory / ParametoricMotion
    2) ShapeVariation

Visual features for the information of object motion includes MotionTrajectory and ParametoricMotion. It is not appropriate to use both at the same time, but it is necessary that at least one of them can be selected according to the purpose. Usage of these visual features is shown in Table. 6.

Table. 6

| Video Object Description Scheme | | |
|---|---|---|
| Signal Feature Group | Visual Feature | Application |
| Time Series | VisualTimeSeries (Rectangular Picture Description Scheme) | For frame contained in moving picture |
| Representativ e Feature | GofGopColor (Rectangular Picture Description Scheme ) | Description for whole of moving picture |
| Motion | MotionActivity | - |
| Information of Object Motion | MotionTrajectory | Describing time series variation of a representative point in a region by interpolation |
| | ParametricMotion | Description of motion of object where rigid body approximation is possible |
| Shape Variation | ShapeVariation | - |

The Parametric Motion approximates general motion of the region by five kinds of motion models such as affine transformation, perspective transformation and so on. Its purpose is to describe the motion of an object which can be approximated as a rigid body.

The MotionTrajectory represents time series variation of a representative point (e.g. center of gravity) in the region, and describes positions of sampling points on the time axis and a method of interpolating between the sampling points. Such an application can be possible as picking up a person who behaved in a specific way from security camera video database by describing person's walking trajectory. Therefore, the video object description scheme is designed such that either one of the MotionTrajectory and the ParametoricMotion can be selected as a feature representing the shape. Moreover, the video description scheme is designed such that necessary signal features can be selected from the time series data, the representative feature and the motion included in the video sequence description scheme.

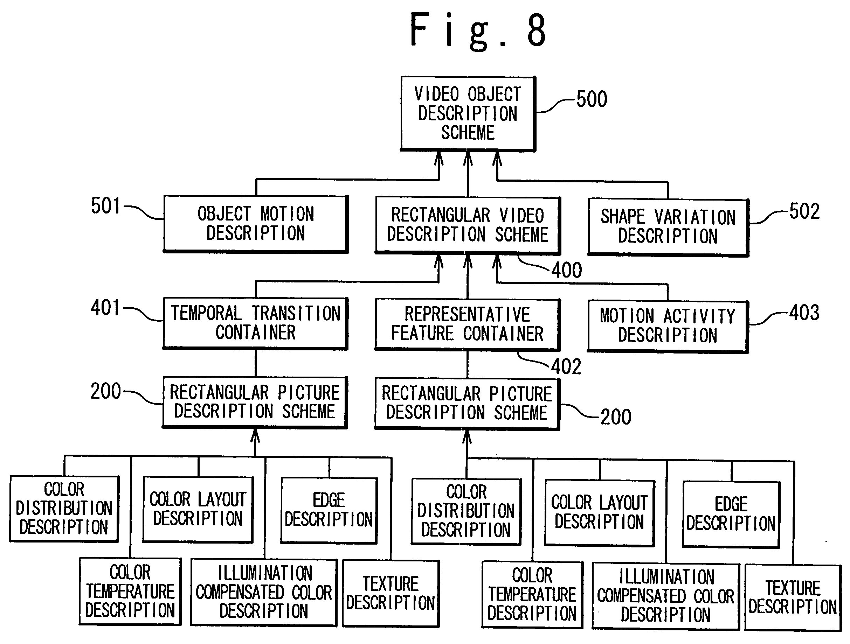

Fig. 8 is a schematic diagram showing description tools included in the video object description scheme according to the present embodiment. The video object description scheme 500 defines signal features of an object and an arbitrary-shaped region in a moving picture. The video object description scheme 500 includes an object motion description 501 and a shape variation description 502 for a video object, and features representative of all frames included in the rectangular video (video sequence) description scheme 400.

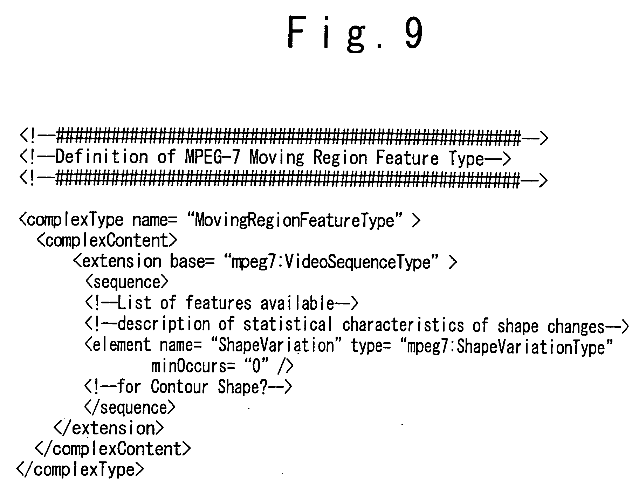

Fig. 9 is a diagram showing an example of the video sequence description scheme in the XML. The description scheme is executed by an arbitrary language and includes arbitrary contained descriptions (or more descriptions). It should be noted that in Fig. 9 a name indicated by "name" attribute in an element component is arbitrary. However, it is preferable that the name represents feature of the descriptor indicated by "type".

<Examples of Visual Feature Selection Screen>

(1) In the case of rectangular picture

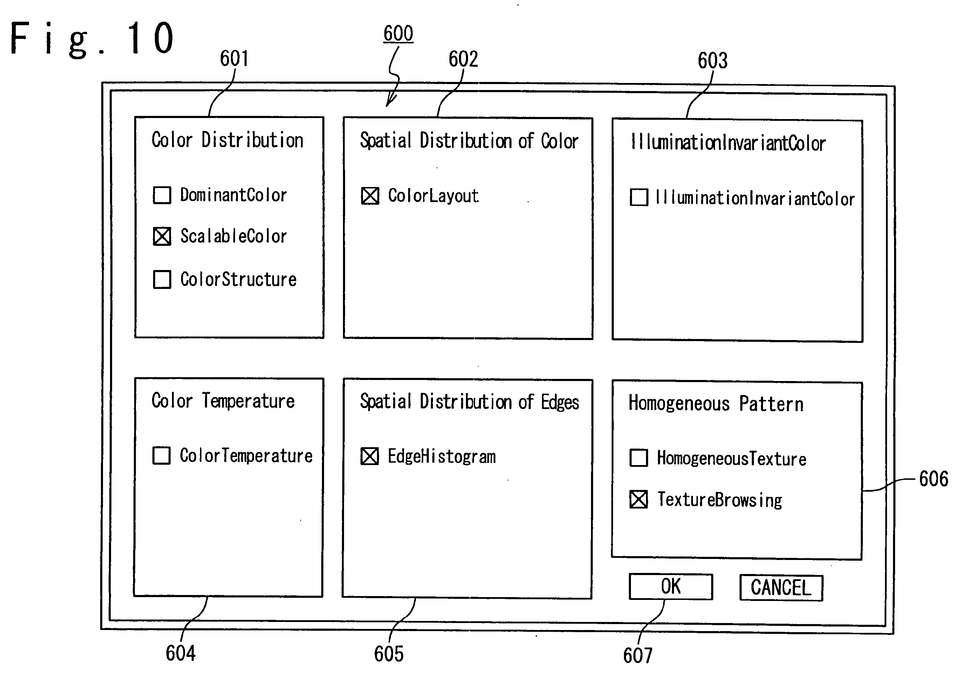

Fig. 10 is a diagram showing an example of a visual feature selection screen when the specified picture is a rectangular picture. As previously mentioned, the rectangular picture description scheme 200 includes the color distribution description 201, the color layout description 202, the edge description 203, the color temperature description 204, the illumination compensated color description 205 and the texture description 206 (refer to Fig. 2). In the present embodiment, by executing the example of XML description shown in Fig. 3, the screen is displayed such that a user can select necessary signal features from these description tools.

As shown in Fig. 10, color distribution (Color Distribution) 601, color layout (Spatial Distribution of Color) 602, illumination compensated color (Illumination Independent Color) 603, color temperature (Color Temperature) 604, edge distribution (Spatial Distribution of Edges) 605 and texture (Homogeneous Pattern) 606 are displayed so that they can be selected by using a pointing device such as a mouse and the like.

As previously mentioned, at least one of the DominantColor, the ScalableColor and the ColorStructure can be selected as for the Color Distribution 601. Also, the Homogeneous Pattern 606 is displayed such that at least one of the HomogeniousTexture and the TextureBrowing can be selected. Also, it is possible to start the extraction of the selected visual feature by clicking on a button 607 with the mouse and the like.

As mentioned above, it is possible by defining appropriate picture description schemes for a rectangular picture to provide the picture description system in which only appropriate features can be selected and extracted for the rectangular picture.

(2) In the case of arbitrary-shaped picture

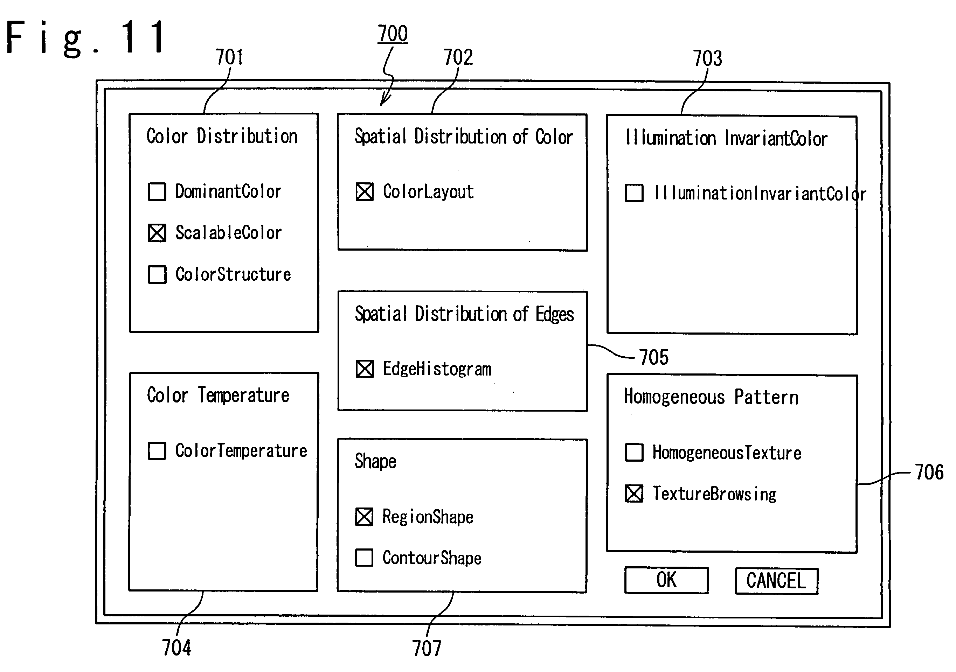

Fig. 11 is a diagram showing an example of a visual feature selection screen when the specified picture is an arbitrary-shaped picture. As previously mentioned, the image clip description scheme 300 includes the shape description 301, the color distribution description 201, the color layout description 202, the edge description 203, the color temperature description 204, the illumination compensated color description 205 and the texture description 206 (refer to Fig. 4). In the present embodiment, by executing the example of XML description shown in Fig. 5, the screen is displayed such that a user can select necessary signal features from these description tools.

As shown in Fig. 11, color distribution (Color Distribution) 701, color layout (Spatial Distribution of Color) 702, illumination compensated color (Illumination Independent Color) 703, color temperature (Color Temperature) 704, edge distribution (Spatial Distribution of Edges) 705, texture (Homogeneous Pattern) 706 and shape (Shape) 707 are displayed so that they can be selected by using a pointing device such as a mouse and the like.

As previously mentioned, either one of the RegionShape and the ContourShape can be selected as for the Shape 707. Also, at least one of the DominantColor, the ScalableColor and the ColorStructure can be selected as for the Color Distribution 701. Also, the Homogeneous Pattern 706 is displayed such that at least one of the HomogeniousTexture and the TextureBrowing can be selected.

After a desired description is selected, it is possible to start the extraction of the selected visual feature by clicking on an OK button with the mouse and the like. As mentioned above, it is possible by defining appropriate image clip description schemes for an arbitrary-shaped picture to provide the picture description system in which only appropriate features can be selected and extracted for the arbitrary-shaped picture.

(3) In the case of video sequence

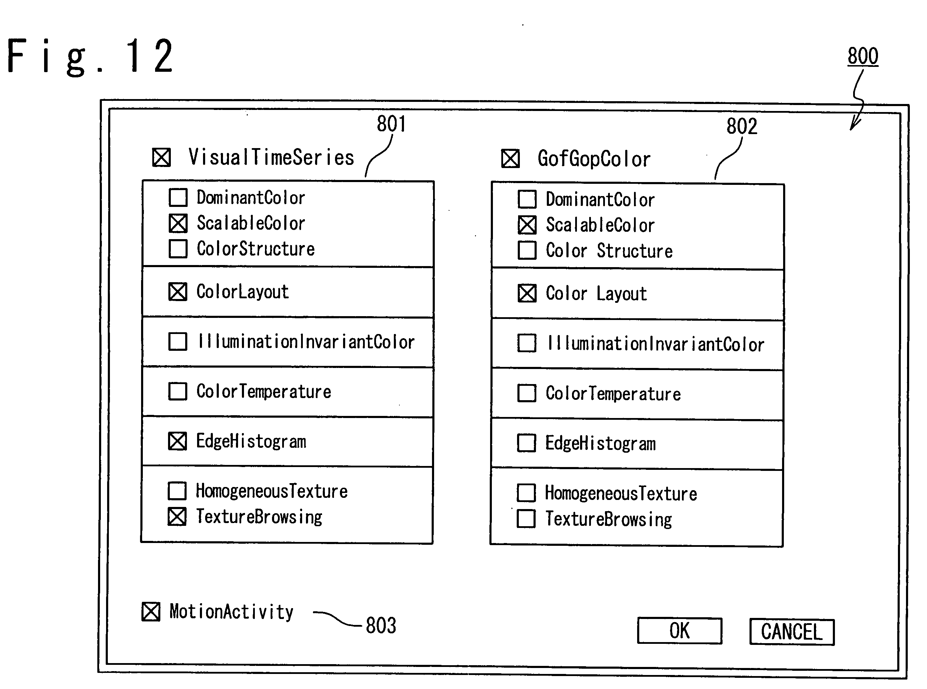

Fig. 12 is a diagram showing an example of a visual feature selection screen when the specified picture is a rectangular moving picture. As previously mentioned, the video sequence description scheme 400 includes the temporal transition container 401, the representative feature container 402 and the motion activity description 403 (refer to Fig. 6). In the present embodiment, by executing the example of XML description shown in Fig. 7, the screen is displayed such that a user can select necessary signal features from these description tools.

As shown in Fig. 12, the visual features included in the rectangular picture description scheme allocated to time series (VisualTimeSeries) 801, the visual features included in the rectangular picture description scheme allocated to representative feature (GofGopColor) 802 and motion activity (MotionActivity) 803 are displayed so that they can be selected by using a pointing device such as a mouse and the like.

After a desired description is selected, it is possible to start the extraction of the selected visual feature by clicking on an OK button with the mouse and the like. As mentioned above, it is possible by defining appropriate video sequence description schemes for a rectangular moving picture to provide the picture description system in which only appropriate features can be selected and extracted for the rectangular moving picture.

(4) In the case of video object

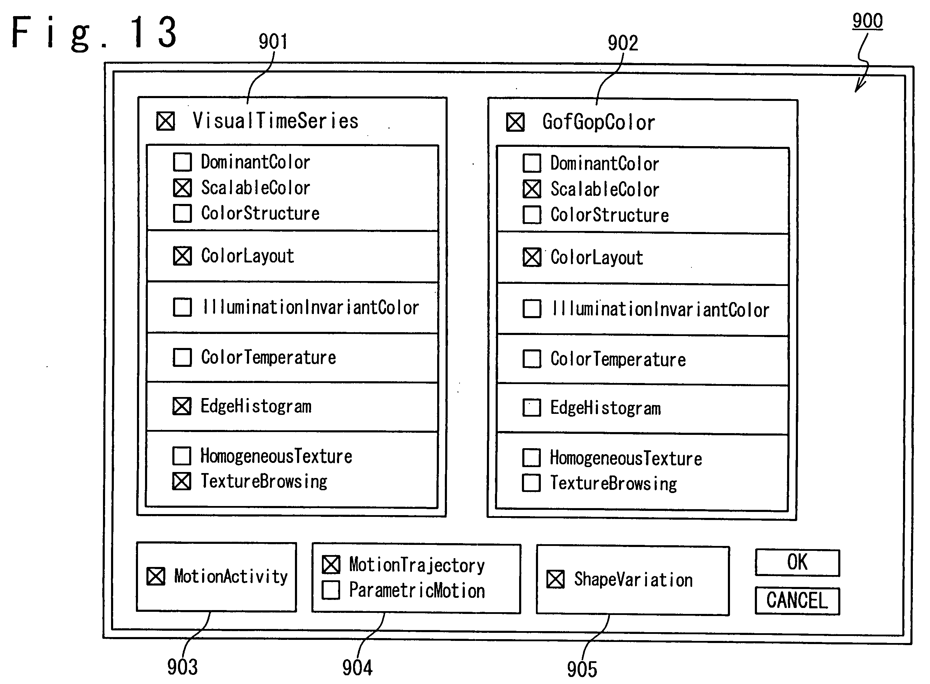

Fig. 13 is a diagram showing an example of a visual feature selection screen when the specified picture is an arbitrary-shaped moving picture. As previously mentioned, the video object description scheme 500 includes the object motion description 501 and the shape variation description 502 for a video object and features representative of all frames included in the rectangular video (video sequence) description scheme 400 (refer to Fig. 8). In the present embodiment, by executing the example of XML description shown in Fig. 9, the screen is displayed such that a user can select necessary signal features from these description tools.

As shown in Fig. 13, the visual features included in the rectangular picture description scheme allocated to time series (VisualTimeSeries) 901, the visual features included in the rectangular picture description scheme allocated to representative feature (GofGopColor) 902, motion activity (MotionActivity) 903, object motion (Motion) 904 and shape variation (Shape Variation) 905 are displayed so that they can be selected by using a pointing device such as a mouse and the like.

As previously mentioned, at least one of the MotionTrajectory and the ParametricMotion can be selected as for the Motion 904. After a desired description is selected, it is possible to start the extraction of the selected visual feature by clicking on an OK button with the mouse and the like. As mentioned above, it is possible by defining appropriate video object description schemes for an arbitrary-shaped moving picture to provide the picture description system in which only appropriate features can be selected and extracted for the arbitrary-shaped moving picture.

<Operation of Picture Description>

Next, a general operation of the present embodiment will be described in detail.

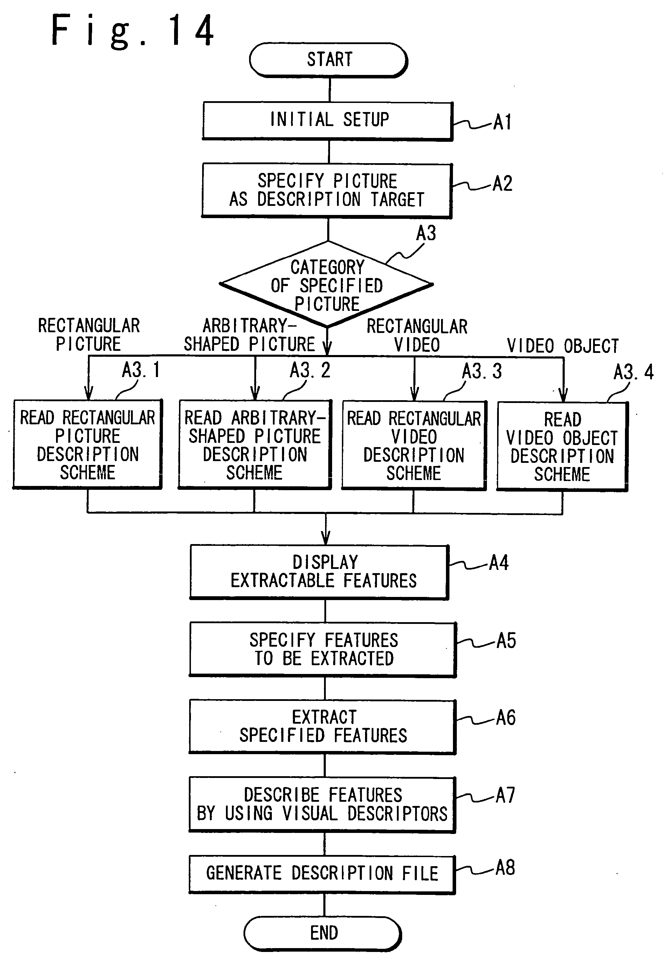

Fig. 14 is a flow chart showing an operation of the picture description according to the present embodiment. First, the picture description schemes are stored in the description scheme memory 106 on a category basis so that they can be retrieved. That is to say, as shown in Fig. 1, the rectangular picture description scheme 200, the arbitrary-shaped picture description scheme 300, the video sequence description scheme 400 and the video object description scheme 500 are stored in the description scheme memory 106. Also, setting of parameters necessary for extracting visual features is carried out (Step A1). By using the input unit 101, a user specifies a target picture for which a description file is generated (Step A2). When specifying a picture as the description target, the user may input a picture file name directly or the user may select from pre-displayed picture list.

When the specified picture is determined, the program control processor 103 orders the description scheme retrieving unit 105 to retrieve a description scheme for the intending picture. The description scheme retrieving unit 105 searches the description scheme memory 106 with category of the specified picture as a key (Step A3). When a picture description scheme associated with the category of the specified picture is found, the description scheme retrieving unit 105 reads the picture description scheme and returns it to the program control processor 103. The program control processor 103 visualizes which features in the read picture description scheme are extractable from the specified picture, and displays it on the display unit 102 (Step A4).

More specifically, when a rectangular picture is specified, the screen as shown in Fig. 10 is displayed with reference to the read rectangular picture description scheme (Step A3.1). When an arbitrary-shaped picture is specified, the screen as shown in Fig. 11 is displayed with reference to the read arbitrary-shaped picture description scheme (Step A3.2). When a video sequence is specified, the screen as shown in Fig. 12 is displayed with reference to the read video sequence description scheme (Step A3.3). When a video object is specified, the screen as shown in Fig. 13 is displayed with reference to the read video object description scheme (Step A3.4). It should be noted that such a display can be carried out according to an order from the input unit 101.

With the input unit 101, the user specifies features to be extracted out of the list of extractable features displayed on the display unit 102 (Step A5). When the specified features are determined, the program control processor 103 orders the visual feature extracting unit 107 to extract the desired features. The visual feature extracting unit 107 reads the specified picture from the picture data memory 110 and extracts the specified features from that picture (Step A6).

The description file generating unit 108 describes features and parameters generated by the visual feature extracting unit 107 with the visual descriptors (Step A7), and generates a description file from the described data (Step A8). The description file can be stored in the description file memory 109.

According to the first embodiment as described above, when a picture is specified with the input unit 101, the description scheme retrieving unit 105 retrieves a picture description scheme associated with the category of the picture, and displays visual features extractable from the specified picture in forms exemplified in Fig. 10 to Fig. 13. Thus, the user can easily specify visual features to be extracted. Also, since the kind of supporting tools can be made minimum, it is possible to provide the picture description system in which the system configuration is made simple.

Through evaluation of the similarity between features included in a description file for a specific picture and features included in a description file for another picture, the generated description file can be utilized for similar picture retrieval where similar pictures are retrieved. Thus, only an appropriate description file is utilized for the similar picture retrieval and the like, which makes it possible to improve reliability and precision of the retrieval.

(Second embodiment)

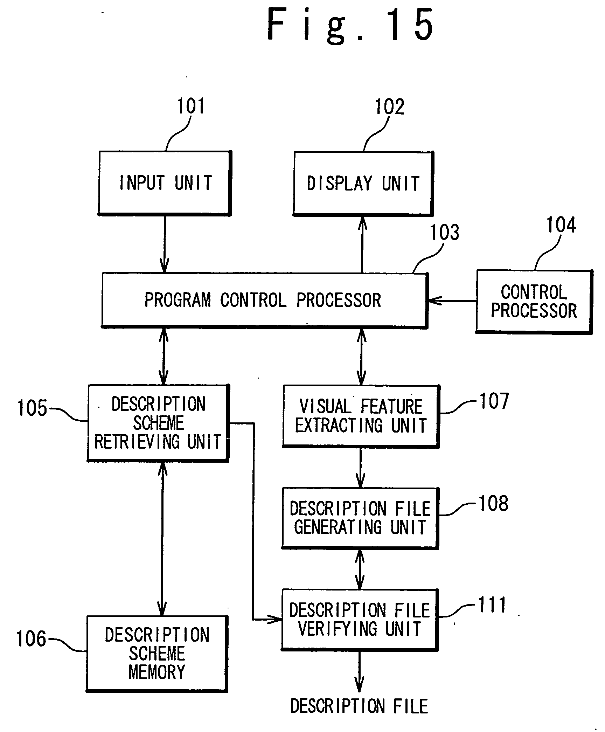

Fig. 15 is a block diagram showing a configuration of a picture description system according to the second embodiment of the present invention. The second embodiment of the present invention further includes a description file verifying unit 111 in addition to the first embodiment shown in Fig. 1.

The description file verifying unit 111 reads the picture description scheme obtained by the description scheme retrieving unit 105, and verifies whether the description file generated by the description file generating unit 108 is precise or not. More specifically, whether or not the kind of features described in the description file is defined in the picture description scheme and the description file conforms the description method defined by the picture description scheme is verified. If the description file conforms the description method defined in the picture description scheme, the description file is outputted.

As mentioned above, according to the second embodiment, the description file verifying unit 111 is provided and the description file is checked against the picture description scheme, which makes it possible to verify whether the format of the description file for the picture is appropriate or not.

Through evaluation of the similarity between features included in a description file for a specific picture and features included in a description file for another picture, the generated description file can be utilized for similar picture retrieval where similar pictures are retrieved. Thus, only an appropriate description file is utilized for the similar picture retrieval and the like, which makes it possible to further improve reliability and precision of the retrieval.

(Third embodiment)

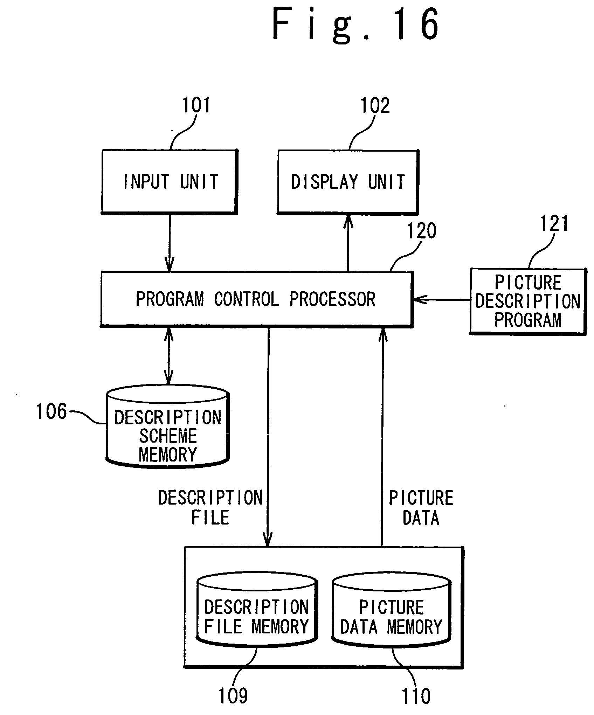

Fig. 16 is a block diagram showing a configuration of a picture description system according to the third embodiment of the present invention. A description file verifying unit 111 is included.

In the picture description system according to the present embodiment, the description scheme retrieving unit 105, the visual feature extracting unit 107, the description file generating unit 108 and the description file verifying unit 111 are implemented in the program control processor 120 on software basis. That is to say, by executing a picture description program 121 stored in a memory, the program control processor 120 can implement picture description functions equivalent to those in the first and the second embodiment. The input unit 101, the display unit 102, the description scheme memory 106, the description file memory 109 and the picture data memory 110 are controlled by the program control processor 120 executing the picture description program 121 in a similar way to the first and the second embodiment. Thus, the picture description system according to the present invention is implemented.

(Fourth embodiment)

The fourth embodiment of the present invention is different from the first embodiment shown in Fig. 1 in that a still region description scheme for describing a still picture, a rectangular video description scheme for describing a set of rectangular frames and a video object description scheme for describing a video object are stored in the description scheme memory 106. Here, the rectangular video description scheme and the video object description scheme are similar to those used in the first embodiment.

Still Picture (StillPicture) Description Scheme

The still picture description scheme is designed for the purpose of describing signal features of all sorts of still pictures. The principal purpose is to retrieve pictures with a similar signal pattern from digital picture archives such as digital photo archives and the like.

The signal features extractable from a still picture are classified into groups; 1) color distribution, 2) color layout, 3) color temperature, 4) illumination compensated color, 5) edge, 6) texture and 7) shape. The visual features belonging to respective groups are defined as follows.

    1) DominantColor / ScalableColor / ColorStructure
    2) ColorLayout
    3) ColorTemperature
    4) IlluminationInvariantColor
    5) EdgeHistogram
    6) HomogeneousTexture / TextureBrowing
    7) ContourShape / RegionShape

As for similar visual features in the groups color distribution, texture and shape, it is not appropriate to use all at the same time, but it is necessary that at least one of them can be selected according to the purpose. The contents and usage of the visual features are the same as those described in the first embodiment, and they are omitted here (for example, refer to Table. 3 and Table. 4).

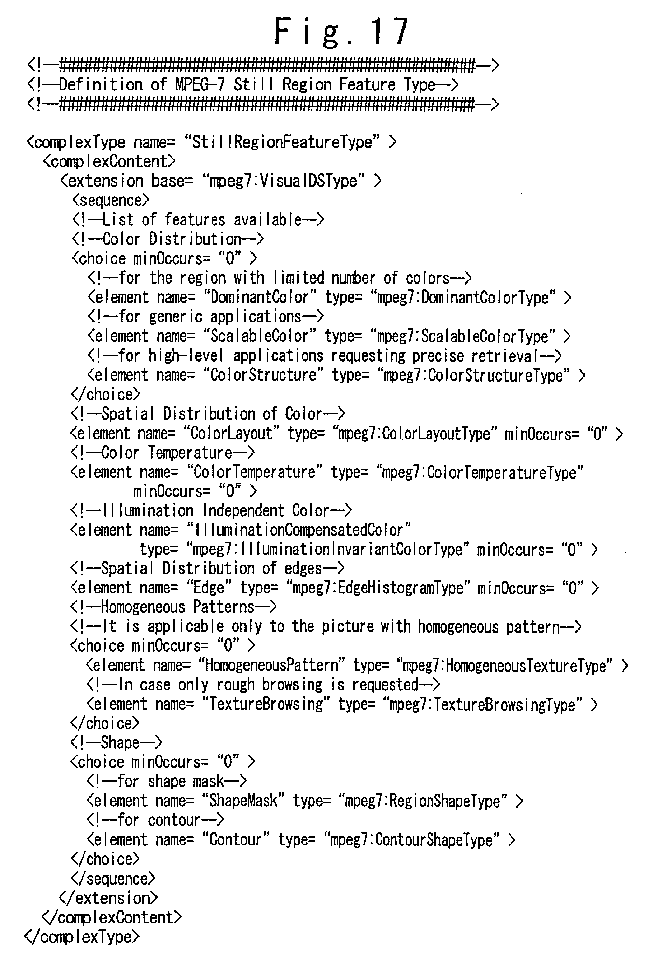

Fig. 17 is a diagram showing an example of the still region description scheme in the XML. The description scheme is executed by an arbitrary language and includes arbitrary contained descriptions (or more descriptions). It should be noted that in Fig. 17 a name indicated by "name" attribute in an element component is arbitrary. However, it is preferable that the name represents feature of the descriptor indicated by "type".

The number of description schemes is reduced as compared with the first embodiment, which makes it possible to provide the picture description system in which the system configuration is made simple.

(Fifth embodiment)

The fifth embodiment of the present invention is different from the first embodiment shown in Fig. 1 in that a still region description scheme for describing a still picture and a moving picture description scheme for describing a moving picture are stored in the description scheme memory 106. Here, the still picture description scheme is similar to that shown in the fourth embodiment mentioned above.

<Moving Picture Description Scheme>

The moving picture description scheme is designed for the purpose of describing signal features of a moving picture. The signal features extractable from a moving picture are classified into five groups; (1) time series data of a feature of rectangular pictures, (2) a feature representative of all frames in the moving picture, (3) motion activity, (4) information of object motion and (5) shape variation. The visual features belonging to respective groups are defined as follows.

    1) VisualTimeSeries
    2) GofGopColor
    3) MotionActivity
    4) MotionTrajectory / ParametoricMotion
    5) ShapeVariation

Here, the contents and usage of the visual features are the same as those described in the first embodiment, and they are omitted here (for example, refer to Table. 6).

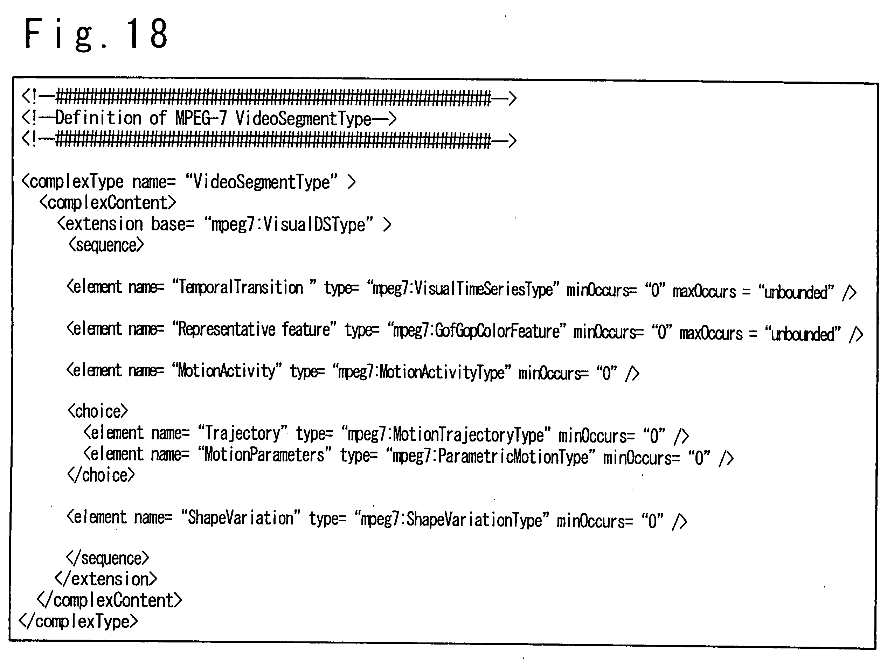

Fig. 18 is a diagram showing an example of the moving picture description scheme in the XML. The description scheme is executed by an arbitrary language and includes arbitrary contained descriptions (or more descriptions). It should be noted that in Fig. 18 a name indicated by "name" attribute in an element component is arbitrary. However, it is preferable that the name represents feature of the descriptor indicated by "type".

The number of description schemes is reduced as compared with the first embodiment, which makes it possible to provide the picture description system in which the system configuration is made simple.

According to the present invention as described above, when a picture is specified with the input unit, a picture description scheme associated with the category of the picture is taken and extractable appropriate visual features are displayed. Therefore, it becomes possible to easily select meaningful visual features and extract visual features which represent the specified picture appropriately. Thus, efficiency and precision of the picture retrieval can be improved.

Also, the description schemes are defined for every category of the picture. Thus, it becomes possible to minimize the kind of feature extraction and description tools to be supported and hence to provide the picture description system in which the system configuration is made simple.

Moreover, by checking the description file generated as mentioned above against the picture description scheme, it becomes possible to verify whether the format of the description file for the picture is appropriate or not and to further improve the efficiency and precision of the picture retrieval.

**Claims**

1. A picture description system comprising:

   a memory unit configured for storing description schemes defined for every category of picture; and
   a control unit configured for, when a picture is specified, specifying features extractable from said specified picture with reference to a description scheme in said memory unit associated with category of said specified picture.

2. The picture description system according to claim 1, further comprising

   a description file generating unit configured for extracting data associated with said specified features from said specified picture and for generating a description file of said specified picture.

3. The picture description system according to claim 1,
   wherein said control unit displays said specified features selectably on said display unit.

4. The picture description system according to claim 3, further comprising

   a description file generating unit configured for extracting data associated with selected features out of said specified features from said specified picture and for generating a description file of said specified picture.

5. The picture description system according to claim 2 or 4, further comprising

   a description file verifying unit configured for verifying said description file generated by said description file generating unit by using said description scheme associated with said category of specified picture.

6. The picture description system according to claim 1,
   wherein said memory unit stores at least one of a rectangular picture description scheme for describing a rectangular picture, an arbitrary-shaped picture description scheme for describing an arbitrary-shaped picture, a rectangular video description scheme for describing a moving picture as a set of rectangular frames and a video object description scheme for describing an arbitrary-shaped object in a moving picture as a set of rectangular frames.

7. The picture description system according to claim 6,
   wherein said rectangular picture description scheme has at least one feature of a plurality of features including at least color distribution, color layout, color temperature, illumination compensated color, edge distribution and texture.

**8.** The picture description system according to claim 7,
wherein each of said at least one feature consists of at least one selectable descriptor,
wherein said color distribution feature consists of a plurality of descriptors including at least DominantColor, ScalableColor and ColorStructure, at least one of which is selectable,
wherein said texture feature consists of a plurality of descriptors including at least HomogeneousTexture and TextureBrowing, at least one of which is selectable.

**9.** The picture description system according to claim 6,
wherein said arbitrary-shaped picture description scheme has at least one feature of a plurality of features including at least color distribution, color layout, color temperature, illumination compensated color, edge distribution, texture and shape.

**10.** The picture description system according to claim 9,
wherein each of said at least one feature consists of at least one selectable descriptor,
wherein said shape feature consists of a plurality of descriptors including at least ContourShape and RegionShape, at least one of which is selected.

**11.** The picture description system according to claim 6,
wherein said rectangular video description scheme includes at least one feature of a plurality of features including at least time series data, representative feature and motion activity of said rectangular frames.

**12.** The picture description system according to claim 11,
wherein each of said at least one feature consists of at least one selectable descriptor,
wherein said time series data has at least one feature of a plurality of features including at least color distribution, color layout, color temperature, illumination compensated color, edge distribution and texture, each of which consists of at least one selectable descriptor,
wherein said color distribution feature consists of a plurality of descriptors including at least DominantColor, ScalableColor and ColorStructure, at least one of which is selectable,
wherein said texture consists of a plurality of descriptors including at least HomogeneousTexture and TextureBrowing, at least one of which is selectable.

**13.** The picture description system according to claim 11,
wherein said representative feature has at least one feature of a plurality of features including at least color distribution, color layout, color temperature, illumination compensated color, edge distribution and texture, each of which consists of at least one selectable descriptor,
wherein said color distribution feature consists of a plurality of descriptors including at least DominantColor, ScalableColor and ColorStructure, at least one of which is selectable,
wherein said texture consists of a plurality of descriptors including at least HomogeneousTexture and TextureBrowing, at least one of which is selectable.

**14.** The picture description system according to claim 6,
wherein said video object description scheme has at least one feature of a plurality of features including at least time series data, representative feature and motion activity of said rectangular frames and object motion and shape variation.

**15.** The picture description system according to claim 14,
wherein each of said at least one feature consists of at least one selectable descriptor,
wherein said object motion consists of a plurality of descriptors including at least MotionTrajectory and ParameterMotion, at least one of which is selectable.

**16.** The picture description system according to claim 14,
wherein said time series data has at least one feature of a plurality of features including at least color distribution, color layout, color temperature, illumination compensated color, edge distribution and texture, each of which consists of at least one selectable descriptor,
wherein said color distribution feature consists of a plurality of descriptors including at least DominantColor, ScalableColor and ColorStructure, at least one of which is selectable,
wherein said texture consists of a plurality of descriptors including at least HomogeneousTexture and TextureBrowing, at least one of which is selectable.

**17.** The picture description system according to claim 14,

wherein said representative feature has at least one feature of a plurality of features including at least color distribution, color layout, color temperature, illumination compensated color, edge distribution and texture, each of which consists of at least one selectable descriptor,

wherein said color distribution feature consists of a plurality of descriptors including at least DominantColor, ScalableColor and ColorStructure, at least one of which is selectable,

wherein said texture consists of a plurality of descriptors including at least HomogeneousTexture and TextureBrowing, at least one of which is selectable.

**18.** A picture description method comprising the steps of:

storing description schemes defined for every category of picture;

specifying, when a picture is specified, features extractable from said specified picture by retrieving a description scheme associated with category of said specified picture; and

displaying selectably features extractable from said specified features.

**19.** The picture description method according to claim 18, further comprising the steps of:

selecting desired features from said displayed features; and

extracting features from said specified picture according to said desired features and generating a description file.

**20.** The picture description method according to claim 19, further comprising a step of verifying said generated description file by using a description scheme associated with said category of specified picture.

**21.** A software product executable on a computer, comprising the functions of:

retrieving, when a picture is specified, a description scheme associated with category of said specified picture from a memory unit storing description schemes defined for every category of picture;

specifying features extractable from said specified picture based on retrieved description scheme; and

displaying selectably features extractable from said specified features.

**22.** The software product according to claim 21, further comprising a function of extracting features, when desired features are selected from said displayed features, from said specified picture according to said desired features and generating a description file.

**23.** The software product according to claim 22, further comprising a function of verifying said generated description file by using a description scheme associated with said category of specified picture.

**24.** The picture description system according to claim 1,

wherein said memory unit stores at least one of a still picture description scheme for describing features of a still picture, a rectangular video description scheme for describing a moving picture as a set of rectangular frames and a video object description scheme for describing an arbitrary-shaped object in a moving picture as a set of rectangular frames.

**25.** The picture description system according to claim 24,

wherein said still picture description scheme has at least one feature of a plurality of features including at least color distribution feature, color layout feature, color temperature feature, illumination compensated color feature, edge distribution feature and texture feature.

**26.** The picture description system according to claim 25,

wherein each of said at least one feature consists of at least one selectable descriptor,

wherein said color distribution feature consists of a plurality of descriptors including at least DominantColor, ScalableColor and ColorStructure, at least one of which is selectable,

wherein said color layout feature consists of descriptors including at least Colorlayout, at least one of which is selectable,

wherein said color temperature feature consists of descriptors including at least ColorTemperature, at least one of which is selectable,

wherein said illumination compensated color feature consists of descriptors including at least Illumination-InvariationColor, at least one of which is selectable,

wherein said edge distribution feature consists of descriptors including at least EdgeHistogram, at least one of which is selectable,

wherein said texture feature consists of a plurality of descriptors including at least HomogeneousTexture and TextureBrowing, at least one of which is selectable.

27. The picture description system according to claim 25,

wherein said still picture description scheme further includes shape feature,

wherein said shape feature consists of a plurality of descriptors including at least RegionShape and ContourShape, at least one of which is selectable.

28. The picture description system according to claim 1,

wherein said memory unit stores at least one of a still picture description scheme for describing features of a still picture and a moving picture description scheme for describing a moving picture.

29. The picture description system according to claim 28,

wherein said moving picture description scheme includes at least one feature of a plurality of features including at least time series data of frames of said moving picture, representative feature of said moving picture and motion activity of said moving picture,

wherein each feature includes at least one selectable descriptor.

30. The picture description system according to claim 29,

wherein said moving picture description scheme further includes motion description of said moving picture and shape variation description of said moving picture.

31. A description scheme used in a picture description system which specifies features extractable from a specified picture by referring to a description scheme associated with category of said specified picture, comprising

at least one feature of a plurality of features including at least color distribution feature, color layout feature, color temperature feature, illumination compensated color feature, edge distribution feature and texture feature,

wherein said color distribution feature consists of a plurality of descriptors including at least DominantColor, ScalableColor and ColorStructure, at least one of which is selectable,

wherein said color layout feature consists of descriptors including at least Colorlayout, at least one of which is selectable,

wherein said color temperature feature consists of descriptors including at least ColorTemperature, at least one of which is selectable,

wherein said illumination compensated color feature consists of descriptors including at least Illumination-InvariationColor, at least one of which is selectable,

wherein said edge distribution feature consists of descriptors including at least EdgeHistogram, at least one of which is selectable,

wherein said texture feature consists of a plurality of descriptors including at least HomogeneousTexture and TextureBrowing, at least one of which is selectable.

32. The description scheme according to claim 31,

wherein said description scheme further includes shape feature,

wherein said shape feature consists of a plurality of descriptors including at least RegionShape and ContourShape, at least one of which is selectable.

33. The picture description system according to claim 28,

wherein a description scheme is used in a picture description system which specifies features extractable from a specified picture by referring to a description scheme associated with category of said specified picture, and includes at least one feature of a plurality of features including at least time series data of frames of said moving picture, representative feature of said moving picture and motion activity of said moving picture,

wherein each feature includes at least one selectable descriptor.

**34.** The picture description system according to claim 29,
wherein said moving picture description scheme further includes motion description of said moving picture and shape variation description of said moving picture.

# Fig.1

# Fig. 2

EP 1 569 448 A1

200 — RECTANGULAR PICTURE DESCRIPTION SCHEME

COLOR DISTRIBUTION DESCRIPTION

COLOR LAYOUT DESCRIPTION

EDGE DESCRIPTION

COLOR TEMPERATURE DESCRIPTION

ILLUMINATION COMPENSATED COLOR DESCRIPTION

TEXTURE DESCRIPTION

201    202    203    204    205    206

Fig. 3

```
<!-###############################################-->
<!--Definition of MPEG-7 PictureType-->
<!-###############################################-->

<complexType name= "PictureType" >
  <complexContent>
    <extension base = "mpeg7:VisualDSType" >
      <sequence>
      <choice minOccurs= "0" >
        <element name= "DominantColor" type= "mpeg7:DominantColorType" >
        <element name= "ScalableColor" type= "mpeg7:ScalableColorType" >
        <element name= "ColorStructure" type= "mpeg7:ColorStructureType" >
      </choice>

      <element name= "ColorLayout" type= "mpeg7:ColorLayoutType" minOccurs= "0" >

      <element name= "ColorTemperature" type= "mpeg7:ColorTemperatureType" minOccurs= "0" >

      <element name= "IlluminationCompensatedColor" type= "mpeg7:IlluminationInvariantColorType" minOccurs= "0" >

      <element name= "Edge" type= "mpeg7:EdgeHistogramType" minOccurs= "0" >

      <choice minOccurs= "0" >
        <element name= "HomogeneousTexture" type= "mpeg7:HomogeneousTextureType" >
        <element name= "TextureBrowsing" type= "mpeg7:TextureBrowsingType" >
      </choice>

      </sequence>
    </extension>
  </complexContent>
</complexType>
```

EP 1 569 448 A1

# Fig. 4

IMAGE CLIP DESCRIPTION SCHEME —300

RECTANGULAR PICTURE DESCRIPTION SCHEME —200

SHAPE DESCRIPTION —301

COLOR DISTRIBUTION DESCRIPTION —201

COLOR LAYOUT DESCRIPTION —202

EDGE DESCRIPTION —203

COLOR TEMPERATURE DESCRIPTION —204

ILLUMINATION COMPENSATED COLOR DESCRIPTION —205

TEXTURE DESCRIPTION —206

EP 1 569 448 A1

# Fig. 5

```
<!—#############################################################—>
<!—Definition of MPEG-7 ImageClipType—>
<!—#############################################################—>

<complexType name= "ImageClipType" >
  <complexContent>
    <extension base = "mpeg7:PictureType" >
      <sequence>

      <choice minOccurs= "0" >
        <element name= "ShapeMask" type= "mpeg7:RegionShapeType" >
        <element name= "Contour" type= "mpeg7:ContourShapeType" >
      </choice>

      </sequence>
    </extension>
  </complexContent>
</complexType>
```

EP 1 569 448 A1

# Fig. 6

RECTANGULAR VIDEO DESCRIPTION SCHEME —400

TEMPORAL TRANSITION CONTAINER 401

REPRESENTATIVE FEATURE CONTAINER 402

MOTION ACTIVITY DESCRIPTION 403

RECTANGULAR PICTURE DESCRIPTION SCHEME 200

RECTANGULAR PICTURE DESCRIPTION SCHEME 200

COLOR DISTRIBUTION DESCRIPTION

COLOR LAYOUT DESCRIPTION

EDGE DESCRIPTION

COLOR DISTRIBUTION DESCRIPTION

COLOR LAYOUT DESCRIPTION

EDGE DESCRIPTION

COLOR TEMPERATURE DESCRIPTION

ILLUMINATION COMPENSATED COLOR DESCRIPTION

TEXTURE DESCRIPTION

COLOR TEMPERATURE DESCRIPTION

ILLUMINATION COMPENSATED COLOR DESCRIPTION

TEXTURE DESCRIPTION

EP 1 569 448 A1

# Ｆｉｇ．7

```
<!--###########################################################-->
<!--Definition of MPEG-7 Video Sequence Feature Type-->
<!--###########################################################-->

<complexType name= "VideoSequenceFeatureType" >
  <complexContent>
      <extension base = "mpeg7:VisualDSType" >
        <sequence>
        <!--List of features available-->
        <!--Temporal transition of frame feature-->
        <element name= "TemporalTransition" type= "mpeg7:VisualTimeSeriesType"
              minOccurs= "0" maxOccurs ="unbounded"/>
        <!--Representative feature over all frame in the sequence-->
        <element name= "RepresentativeFeature" type= "mpeg7:GofGopColor"
              minOccurs= "0" maxOccurs ="unbounded"/>
        <!--motion activity-->
        <element name= "MotionActivity" type= "mpeg7:MotionActivityType"
                    minOccurs= "0" />
      </sequence>
    </extension>
  </complexContent>
</complexType>
```

# Fig. 8

EP 1 569 448 A1

# Fig. 9

```
<!--###########################################################-->
<!--Definition of MPEG-7 Moving Region Feature Type-->
<!--###########################################################-->

<complexType name= "MovingRegionFeatureType" >
  <complexContent>
      <extension base= "mpeg7:VideoSequenceType" >
        <sequence>
        <!--List of features available-->
        <!--description of statistical characteristics of shape changes-->
        <element name= "ShapeVariation" type= "mpeg7:ShapeVariationType"
                minOccurs= "0" />
        <!--for Contour Shape?-->
        </sequence>
    </extension>
  </complexContent>
</complexType>
```

# Fig. 10

**600**

601 — Color Distribution
- ☐ DominantColor
- ☒ ScalableColor
- ☐ ColorStructure

602 — Spatial Distribution of Color
- ☒ ColorLayout

603 — IlluminationInvariantColor
- ☐ IlluminationInvariantColor

604 — Color Temperature
- ☐ ColorTemperature

605 — Spatial Distribution of Edges
- ☒ EdgeHistogram

606 — Homogeneous Pattern
- ☐ HomogeneousTexture
- ☒ TextureBrowsing

607 — OK    CANCEL

Fig. 11

700

**701 Color Distribution**
- ☐ DominantColor
- ☒ ScalableColor
- ☐ ColorStructure

**702 Spatial Distribution of Color**
- ☒ ColorLayout

**703 Illumination InvariantColor**
- ☐ IlluminationInvariantColor

**704 Color Temperature**
- ☐ ColorTemperature

**705 Spatial Distribution of Edges**
- ☒ EdgeHistogram

**706 Homogeneous Pattern**
- ☐ HomogeneousTexture
- ☒ TextureBrowsing

**707 Shape**
- ☒ RegionShape
- ☐ ContourShape

OK   CANCEL

31

# Fig. 12

**800**

**801** ☒ VisualTimeSeries

- ☐ DominantColor
- ☒ ScalableColor
- ☐ ColorStructure

- ☒ ColorLayout

- ☐ IlluminationInvariantColor

- ☐ ColorTemperature

- ☒ EdgeHistogram

- ☐ HomogeneousTexture
- ☒ TextureBrowsing

**802** ☒ GofGopColor

- ☐ DominantColor
- ☒ ScalableColor
- ☐ Color Structure

- ☒ Color Layout

- ☐ IlluminationInvariantColor

- ☐ ColorTemperature

- ☐ EdgeHistogram

- ☐ HomogeneousTexture
- ☐ TextureBrowsing

☒ MotionActivity —803

[ OK ] [ CANCEL ]

EP 1 569 448 A1

# Fig. 13

EP 1 569 448 A1

# Fig. 14

```
                    ┌──────────────┐
                    │    START     │
                    └──────────────┘
                           │
                    ┌──────────────┐
                    │ INITIAL SETUP│────── A1
                    └──────────────┘
                           │
                    ┌──────────────┐
                    │ SPECIFY PICTURE│──── A2
                    │ AS DESCRIPTION TARGET│
                    └──────────────┘
                           │
                         A3
                    ┌──────────────┐
                    │   CATEGORY   │
                    │ OF SPECIFIED │
                    │   PICTURE    │
                    └──────────────┘
```

RECTANGULAR PICTURE    ARBITRARY-SHAPED PICTURE    RECTANGULAR VIDEO    VIDEO OBJECT

A3.1    A3.2    A3.3    A3.4

| READ RECTANGULAR PICTURE DESCRIPTION SCHEME | READ ARBITRARY-SHAPED PICTURE DESCRIPTION SCHEME | READ RECTANGULAR VIDEO DESCRIPTION SCHEME | READ VIDEO OBJECT DESCRIPTION SCHEME |

```
                    ┌──────────────┐
                    │   DISPLAY    │────── A4
                    │ EXTRACTABLE FEATURES│
                    └──────────────┘
                           │
                    ┌──────────────┐
                    │ SPECIFY FEATURES│──── A5
                    │ TO BE EXTRACTED│
                    └──────────────┘
                           │
                    ┌──────────────┐
                    │   EXTRACT    │────── A6
                    │ SPECIFIED FEATURES│
                    └──────────────┘
                           │
                    ┌──────────────┐
                    │ DESCRIBE FEATURES│── A7
                    │ BY USING VISUAL DESCRIPTORS│
                    └──────────────┘
                           │
                    ┌──────────────┐
                    │GENERATE DESCRIPTION FILE│── A8
                    └──────────────┘
                           │
                    ┌──────────────┐
                    │     END      │
                    └──────────────┘
```

# Fig. 15

| | |
| --- | --- |
| 101 INPUT UNIT | 102 DISPLAY UNIT |

103 PROGRAM CONTROL PROCESSOR

104 CONTROL PROCESSOR

105 DESCRIPTION SCHEME RETRIEVING UNIT

107 VISUAL FEATURE EXTRACTING UNIT

108 DESCRIPTION FILE GENERATING UNIT

111 DESCRIPTION FILE VERIFYING UNIT

106 DESCRIPTION SCHEME MEMORY

DESCRIPTION FILE

EP 1 569 448 A1

# Fig. 16

INPUT UNIT — 101

DISPLAY UNIT — 102

PROGRAM CONTROL PROCESSOR — 120

PICTURE DESCRIPTION PROGRAM — 121

DESCRIPTION SCHEME MEMORY — 106

DESCRIPTION FILE

PICTURE DATA

DESCRIPTION FILE MEMORY — 109

PICTURE DATA MEMORY — 110

# Fig. 17

```
<!--###############################################################-->
<!--Definition of MPEG-7 Still Region Feature Type-->
<!--###############################################################-->

<complexType name= "StillRegionFeatureType" >
  <complexContent>
    <extension base= "mpeg7:VisualDSType" >
      <sequence>
      <!--List of features available-->
      <!--Color Distribution-->
      <choice minOccurs= "0" >
        <!--for the region with limited number of colors-->
        <element name= "DominantColor" type= "mpeg7:DominantColorType" >
        <!--for generic applications-->
        <element name= "ScalableColor" type= "mpeg7:ScalableColorType" >
        <!--for high-level applications requesting precise retrieval-->
        <element name= "ColorStructure" type= "mpeg7:ColorStructureType" >
      </choice>
      <!--Spatial Distribution of Color-->
      <element name= "ColorLayout" type= "mpeg7:ColorLayoutType" minOccurs= "0" >
      <!--Color Temperature-->
      <element name= "ColorTemperature" type= "mpeg7:ColorTemperatureType"
              minOccurs= "0" >
      <!--Illumination Independent Color-->
      <element name= "IlluminationCompensatedColor"
              type= "mpeg7:IlluminationInvariantColorType" minOccurs= "0" >
      <!--Spatial Distribution of edges-->
      <element name= "Edge" type= "mpeg7:EdgeHistogramType" minOccurs= "0" >
      <!--Homogeneous Patterns-->
      <!--It is applicable only to the picture with homogeneous pattern-->
      <choice minOccurs= "0" >
        <element name= "HomogeneousPattern" type= "mpeg7:HomogeneousTextureType" >
        <!--In case only rough browsing is requested-->
        <element name= "TextureBrowsing" type= "mpeg7:TextureBrowsingType" >
      </choice>
      <!--Shape-->
      <choice minOccurs= "0" >
        <!--for shape mask-->
        <element name= "ShapeMask" type= "mpeg7:RegionShapeType" >
        <!--for contour-->
        <element name= "Contour" type= "mpeg7:ContourShapeType" >
      </choice>
      </sequence>
    </extension>
  </complexContent>
</complexType>
```

# Fig.18

```
<!-###################################################-->
<!-Definition of MPEG-7 VideoSegmentType-->
<!-###################################################-->

<complexType name= "VideoSegmentType" >
  <complexContent>
    <extension base= "mpeg7:VisualDSType" >
    <sequence>

      <element name= "TemporalTransition " type= "mpeg7:VisualTimeSeriesType" minOccurs= "0" maxOccurs = "unbounded" />

      <element name= "Representative feature" type= "mpeg7:GofGopColorFeature" minOccurs= "0" maxOccurs = "unbounded" />

      <element name= "MotionActivity" type= "mpeg7:MotionActivityType" minOccurs= "0" />

      <choice>
        <element name= "Trajectory" type= "mpeg7:MotionTrajectoryType" minOccurs= "0" />
        <element name= "MotionParameters" type= "mpeg7:ParametricMotionType" minOccurs= "0" />
      </choice>

      <element name= "ShapeVariation" type= "mpeg7:ShapeVariationType" minOccurs= "0" />

    </sequence>
    </extension>
  </complexContent>
</complexType>
```

EP 1 569 448 A1

## INTERNATIONAL SEARCH REPORT

International application No.

PCT/JP03/15574

**A.   CLASSIFICATION OF SUBJECT MATTER**
    Int.Cl⁷ H04N5/91, G06T7/20

According to International Patent Classification (IPC) or to both national classification and IPC

**B.   FIELDS SEARCHED**

Minimum documentation searched (classification system followed by classification symbols)
    Int.Cl⁷ H04N5/76-5/956, 7/24-7/68, G06T7/20

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| A | JP 2002-170116 A (Sharp Corp.), 14 June, 2002 (14.06.02), Full text; Figs. 1 to 29 & US 2002/106122 A1    & EP 1211645 A2 | 1-34 |
| A | JP 2001-57057 A (Matsushita Electric Industrial Co., Ltd.), 27 February, 2001 (27.02.01), Full text; Figs. 1 to 13 & CN 1278643 A        & EP 1059642 A2 | 1-34 |
| A | JP 2001-167095 A (Mitsubishi Electric Corp.), 22 June, 2001 (22.06.01), Full text; Figs. 1 to 20 & US 2001/04739 A1    & EP 1244025 A1 & WO 01/40995 A1      & CN 1402853 T | 1-34 |

| ☒ | Further documents are listed in the continuation of Box C. | ☐ | See patent family annex. |
|---|---|---|---|

| | Special categories of cited documents: | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 March, 2004 (09.03.04) | 23 March, 2004 (23.03.04) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

| International application No. |
| --- |
| PCT/JP03/15574 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2001-292425 A (Sony Corp.), 19 October, 2001 (19.10.01), Full text; Figs. 1 to 43 (Family: none) | 1-34 |
| A | JP 2001-346140 A (Sharp Corp.), 14 December, 2001 (14.12.01), Full text; Figs. 1 to 29 & EP 1100268 A2 | 1-34 |
| A | JP 2002-184157 A (Sharp Corp.), 28 June, 2002 (28.06.02), Full text; Figs. 1 to 88 & US 2002/059584 A1    & EP 1189437 A2 | 1-34 |
| A | JP 2002-176619 A (Matsushita Electric Industrial Co., Ltd.), 21 June, 2002 (21.06.02), Full text; Figs. 1 to 20 & CN 1344084 A    & US 2002/31262 A1 | 1-34 |

Form PCT/ISA/210 (continuation of second sheet) (July 1998)